(19) Europäisches Patentamt
European Patent Office
Office européen des brevets

(11) Publication number: 0 409 778 A1

# (12) EUROPEAN PATENT APPLICATION

(21) Application number: 90810523.2

(22) Date of filing: 10.07.90

(30) Priority: 15.07.89 DE 3923483

(43) Date of publication of application:
23.01.91 Bulletin 91/04

(84) Designated Contracting States:
BE CH DE ES FR GB IT LI

(51) Int. Cl.5: C09B 62/09, D06P 1/38

(71) Applicant: SANDOZ LTD.
Lichtstrasse 35
CH-4002 Basel(CH)
(84) BE

Applicant: SANDOZ-PATENT-GMBH
Humboldtstrasse 3
D-7850 Lörrach(DE)
(84) DE

(72) Inventor: Gisler, Markus
Marktgasse 61
CH-4310 Rheinfelden(CH)

## (54) Fibre reactive disazo dyes.

(57) Fibre-reactive disazo compounds of the formula

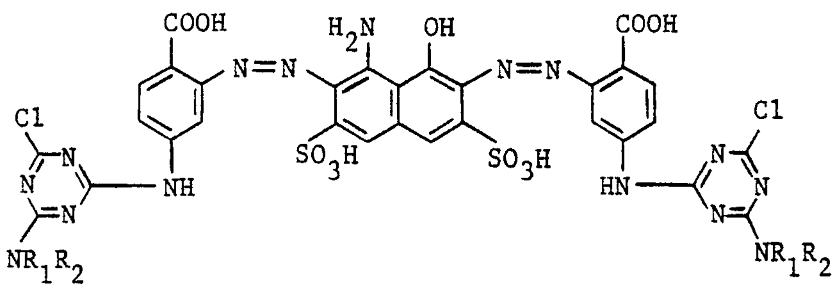

in which the symbols are as defined in the specification, which compounds are in free acid or salt form, and mixtures thereof are useful for dyeing or printing hydroxy group- or nitrogen-containing organic substrates, for example leather and fibre materials containing or consisting of natural or synthetic polyamides or of natural or regenerated cellulose; the most preferred substrate is textile material containing or consisting of cotton. The dyeings and prints obtained show good general fastness properties such as good light fastness, wet fastnesses and resistance to acid hydrolysis.

EP 0 409 778 A1

## FIBRE-REACTIVE DISAZO DYES

This invention relates to disazo compounds containing heterocyclic fibre-reactive groups, processes for their production and their use as fibre-reactive dyestuffs in conventional dyeing and printing processes.

More particularly, this invention provides compounds of formula I

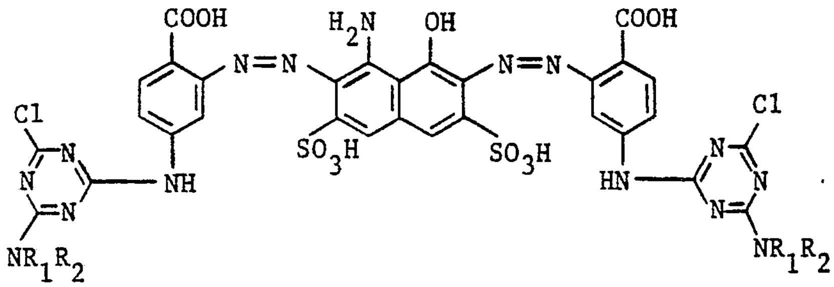

I

in free acid or salt form, in which

each $R_1$, independently, is hydrogen, unsubstituted $C_{1-4}$alkyl, $C_{1-4}$alkyl monosubstituted by halogen, hydroxy, $C_{1-4}$alkoxy, $-SO_3H$, $-OSO_3H$, -COOH or

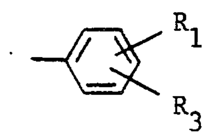

,

or $C_{5-6}$cycloalkyl,

each $R_2$, independently, is hydrogen, unsubstituted $C_{1-4}$alkyl, $C_{1-4}$alkyl monosubstituted by halogen, hydroxy, $C_{1-4}$alkoxy, $-N(R_9)_2$, $-SO_3H$, $-OSO_3H$, -COOH or

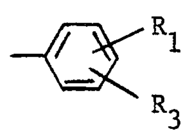

,

$C_{5-6}$cycloalkyl or

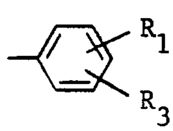

,

in which

each $R_9$ is independently $C_{2-4}$alkyl, and

each $R_3$, independently, is hydrogen, $C_{1-4}$alkoxy, $-SO_3H$, $-SO_2R_4$, $-SO_2NR_5R_6$, $-COR_5R_6$ or -COOH, in which

$R_4$ is $C_{1-4}$alkyl or $C_{2-4}$alkyl monosubstituted by hydroxy or $-OSO_3H$, and

each $R_5$ and $R_6$, independently, is hydrogen, $C_{1-4}$alkyl or $C_{2-4}$hydroxyalkyl,

each $-NR_1R_2$, independently, forms the ring

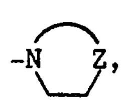

in which

Z is $-(CH_2)_n-$, $-(CH_2)_2-NR_1-$ or $-(CH_2)_2-O-$ wherein

n is 2 or 3 and which is bound to the nitrogen atom of the above ring via the carbon atom,

and mixtures of compounds of formula I.

In the specification, any alkyl or alkoxy group present is linear or branched unless indicated otherwise. In any hydroxy-substituted alkyl group which is attached to a nitrogen atom, the hydroxy group is preferably bound to a carbon atom which is not directly attached to the nitrogen atom.

Any halogen is preferably fluorine, chlorine or bromine; more preferably, it is chlorine or bromine, and especially chlorine.

Any unsubstituted alkyl group as $R_1$, $R_2$, $R_4$, $R_5$ or $R_6$ preferably contains 1 or 2 carbon atoms.

Any unsubstituted alkyl as $R_9$ is preferably $C_{2-3}$alkyl and more preferably ethyl.

Any substituted alkyl group as $R_1$ is preferably a $C_{2-3}$alkyl group which is monosubstituted by hydroxy, methoxy, $-SO_3H$, $-OSO_3H$ or COOH, especially hydroxy.

Any substituted alkyl group as $R_2$ is preferably monosubstituted by chlorine, hydroxy, methoxy, $-N(R_9)_2$, $-SO_3H$, $-OSO_3H$, $-COOH$ or

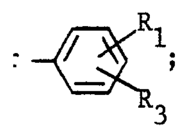

more preferably, it is a $C_{2-3}$alkyl group which is monosubstituted by hydroxy, $-N(R_9)_2$, $-SO_3H$, $-OSO_3H$ or $-COOH$.

Any $C_{1-4}$alkoxy group is preferably methoxy or ethoxy, especially methoxy.

Any $C_{1-4}$cycloalkyl is preferably a cyclohexyl group.

$R_4$ is preferably $R_{4a}$ where $R_{4a}$, is methyl, ethyl, $-(CH_2)_n-OH$ or $-(CH_2)_n-OSO_3H$, in which n is 2 or 3, more preferably it is $R_{4b}$, where $R_{4b}$ is $-(CH_2)_2-OH$ or $-(CH_2)-OSO_3H$.

$R_5$ is preferably $R_{5a}$, where $R_{5a}$ is hydrogen, methyl, ethyl or $C_{2-3}$hydroxyalkyl; more preferably $R_{5b}$, where $R_{5b}$ is hydrogen or $-CH_2CH_2OH$. $R_6$ is preferably $R_{6a}$, where $R_{6a}$ is methyl, ethyl or $C_{2-3}$hydroxyalkyl; more preferably it is $R_{6b}$, where $R_{6b}$ is $C_{2-3}$hydroxyalkyl.

Preferably, $R_3$ is $R_{3a}$, where $R_{3a}$ is hydrogen, methoxy, $-SO_3H$, $-SO_2R_{4a}$ $-SO_2NR_{5b}R_{6a}$, $-CONR_{5a}R_{6a}$ or $-COOH$. More preferably $R_3$ is $R_{3b}$, where $R_{3b}$ is hydrogen, $-SO_3H$, $-SO_2R_{4b}$, $-CONR_{5b}R_{6b}$ or $-COOH$. Even more preferably, $R_3$ is $R_{3c}$, where $R_{3c}$ is hydrogen, $-SO_3H$, $-SO_2R_{4b}$ or $-COOH$. Most preferably, $R_3$ is $R_{3d}$, where $R_{3d}'$ is hydrogen, $-SO_3H$ or $-COOH$.

Each $R_1$ is preferably $R_{1a}$ where each $R_{1a}$, independently, is hydrogen, methyl, ethyl or $C_{2-3}$hydroxyalkyl; and

each $R_2$ is preferably $R_{2a}$, where each $R_{2a}$, independently, is hydrogen, methyl, ethyl, $C_{2-4}$alkyl monosubstituted by hydroxy, $-N(R_9)_2$, $-SO_3H$, $-OSO_3H$ or $-COOH$, $C_{1-3}$alkyl monosubstituted by

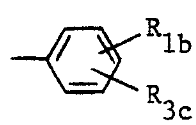

,

cyclohexyl or

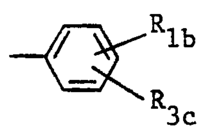

,

in which $R_{1b}$ is as defined below; or

each $-NR_1R_2$ is preferably $-NR_{1a}R_{2a}$, where each $-NR_{1a}R_{2a}$, independently is

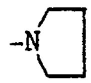 , 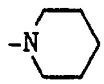 or 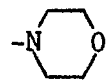 .

Each $R_1$ is more preferably $R_{1b}$, where each $R_{1b}$, independently, is hydrogen, methyl, ethyl or $-CH_2CH_2OH$; and
each $R_2$ is more preferably $R_{2b}$, where each $R_{2b}$, independently, is methyl, ethyl, $C_{2-3}$hydroxyalkyl or

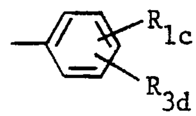 ,

in which $R_{1c}$ is hydrogen or methyl; or
each $-NR_1R_2$ is more preferably $-NR_{1b}R_{2b}$, where each $-NR_{1b}R_{2b}$ is

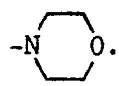

Preferred compounds of formula I are those in which each $-NR_1R_2$, independently, is $-NR_{1a}R_{2a}$. More preferred compounds of formula I are those in which each $-NR_1R_2$, independently, is $-NR_{1b}R_{2b}$. Most preferred compounds of formula I are those in which both $-NR_1R_2$ groups are identical.

When a compound of formula I is in salt form, the cation associated with the sulpho and carboxy groups is not critical and may be any one of those non-chromophoric cations conventional in the field of fibre-reactive dyes provided that the corresponding salts are water-soluble. Examples of such cations are alkali metal cations and unsubstituted or substituted ammonium cations, e.g., lithium, sodium, potassium, ammonium, mono-, di-, tri- and tetra-methylammonium, triethylammonium and mono-, di- and tri-ethanolammonium.

In a compound of formula I the cations of the sulpho and carboxy groups can be the same or different, e.g., they can also be a mixture of the above mentioned cations meaning that the compound of formula I can be in a mixed salt form.

The present invention further provides a process for the preparation of compounds of formula I and mixtures thereof comprising reacting the compound of formula II

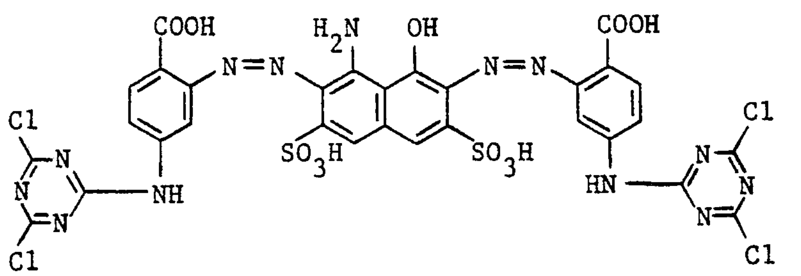 II

which is in free acid or salt form,
with two compounds of formula III
$HNR_1R_2$ III
which are used in free amine or ammonium salt form,
in such an amount that one chlorine atom of each triazine ring of the compound of formula II is replaced whereby the amino compounds of formula III may be the same or are a mixture of different amines in any ratio to each other.

This exchange of chlorine on the triazine ring with an amino group may be carried out by known methods, suitably at between room temperature and slightly elevated temperature.

Compounds of formula I in which the two $-NR_1R_2$ radicals are not identical may be prepared either by

the stepwise addition of two different compounds of formula III to such an extent that selective reaction of the chlorine of only one triazine group is effected, or by reaction with a mixture of two compounds of formula III in one step. In both cases, a mixture of compounds of formula I is obtained containing the compound in which the two $-NR_1R_2$ groups are different besides those compounds containing identical $-NR_1R_2$ groups which can be separated by conventional means, e.g., by chromatography.

The compounds of formula I may be isolated in accordance with known methods, for example, by conventional salting out with alkali metal salt, filtering and drying optionally in vacuo and at slightly elevated temperatures.

Depending on the reaction and isolation conditions, a compound of formula I having sulpho and carboxy groups is obtained in free acid or preferably salt form or even mixed salt form containing, for example, one or more of the above mentioned cations. It may be converted from free acid form to a salt form or mixture of salt forms or vice versa or from one salt form to another by conventional means.

The starting compound of formula II may be prepared in accordance with known processes using, for example, the diazonium salt of the known compound of formula IV

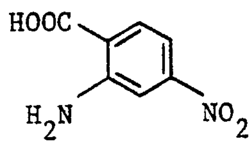

IV

which is reacted in a manner known per se with 1-amino-8-hydroxy-naphthalene-3,6-disulphonic acid in a molar ratio of 2:1 where coupling is effected on both sides of the naphthalene compound. In the resulting disazo compound, the nitro groups are then reduced with a sulfide, and the free amino groups are reacted with cyanuric chloride in a molar ratio of 1:1 to yield the compound of formula II.

The compounds of formula I and mixtures thereof are useful as fibre-reactive dyestuffs for dyeing or printing hydroxy group- or nitrogen- containing organic substrates. Preferred substrates are leather and fibre material containing or consisting of natural or synthetic polyamides and, particularly, of natural or regenerated cellulose such as cotton, viscose and spun rayon. The most preferred substrate is textile material containing or consisting of cotton.

Dyeing or printing is carried out in accordance with known methods conventional in the fibre-reactive dyestuff field. Preferably, the compounds of formula I are applied by exhaust dyeing. It is an advantage that dyeing with the compounds according to the invention is not temperature dependent in the 60-100 °C dyeing temperature range. Therefore, dyeing may be effected almost equally well at 80 °C as at 100 °C without any essential loss of fixation yield, and dyeings of practically the same colour strength are obtained.

The compounds of this invention are compatible with other fibrereactive dyestuffs; they may be applied per se or in combination with appropriate fibre-reactive dyestuffs of the same class having analogous dyeing properties, e.g., fastness properties, extent of ability to exhaust from the dyebath onto the fibre etc. The dyeings obtained with such combination mixtures have good fastness properties and are comparable to those obtained with a single dyestuff.

The compounds of formula I show high exhaust and fixation yields. Any unfixed dyestuff can be easily washed off the substrate. The build-up power of the compounds is also good. The dyeings and prints obtained show good fastness properties, especially with respect to dry and wet light fastness properties and general wet fastnesses such as fastness to washing, water, sea water and sweat. They are also resistant to oxidative influences, e.g., chlorinated water, hypochlorite bleach and peroxide- or perborate- containing washing liquors.

In particular, the dyeings obtained with the compounds of formula I have a surprisingly high resistance to acid hydrolysis which is remarkable for this class of monochlorotriazinyl-containing fibre-reactive dyes. For example, a dyeing when contacted with dilute acetic acid, only shows a very slight staining of the undyed accompanying fabric.

The invention will now be illustrated by the following examples. In the examples all parts and percentages are by weight unless indicated to the contrary. All temperatures are in degrees Centigrade.

**Example 1**

36.6 Parts of 2-amino-4-nitrobenzoic acid are suspended in 300 parts of water and are dissolved by the

addition of 20 parts of 30% sodium hydroxide solution. This solution is made acidic by adding 80 parts of 30% hydrochloric acid. To the suspension thus obtained, 290 parts of ice are added, and diazotization is effected by the addition of 15.8 parts of sodium nitrite. After two hours any excess nitrite is broken down with 0.5 part of sulphamic acid. 32 Parts of fine-powdered 1-amino-8-hydroxynaphthalene-3,6-disulphonic acid are added to the cold diazonium solution. By the stepwise addition of a total of 240 parts of 4N sodium acetate solution, the pH of the suspension is adjusted at 2.5 within two hours. Subsequently, the pH is raised to 8 by adding 20% sodium carbonate solution. The suspension is stirred over-night while keeping the pH at 8, and is then filtered off.

The resulting wet presscake is resuspended in 1000 parts of water, and the suspension is heated to 80°. 90 Parts of 35% sodium sulfide are dissolved in 500 parts of water while heating. This solution is added to the dye suspension. The reaction mixture is then stirred at 80° during 90 minutes. Subsequently, 80 parts of 35% hydrogen peroxide and 15 parts of 30% hydrochloric acid are added. 365 Parts of sodium chloride are added to the solution and the resulting precipitation is filtered off.

31 Parts of cyanuric chloride are stirred in 210 parts of an ice-water mixture during one hour. In the meantime, the filter cake obtained as described above is redissolved in 1000 parts of water by the addition of 6 parts of 30% sodium hydroxide solution. This solution is added dropwise to the cold aqueous suspension of cyanuric chloride. The pH of the reaction mixture is adjusted at 6.5 by adding 75 parts of 20% sodium carbonate solution.

To the resulting dye solution, 8 parts of ethanolamine are added, and the mixture is allowed to stand over-night. During this time, the pH is kept at 9.5 with the addition of 55 parts of 20% sodium carbonate solution. Subsequently, the pH of the mixture is buffered to become 6.5. The suspension is then filtered, and the filter cake is dried in vacuo at 500. The dyestuff thus obtained has the formula

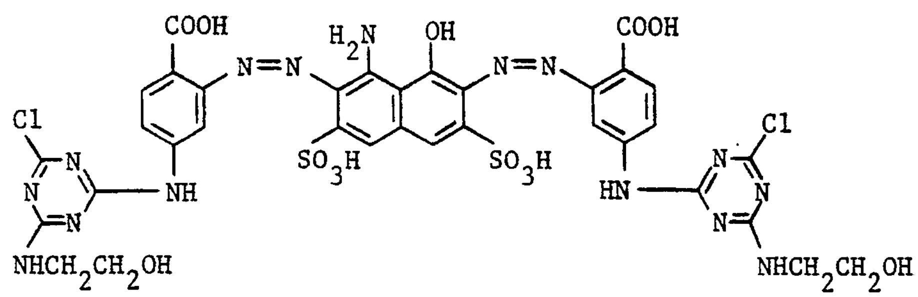

It dyes cotton a deep greenish blue shade. These cotton dyeings show good all-round fastness properties and particularly high resistance to acid hydrolysis.

**Example 2**

When instead of 8 parts of ethanolamine used in Example 1, 10.2 parts of 2-hydroxypropylamine are used and the synthesis otherwise is carried out analogous to the method described in Example 1, the dyestuff corresponding to the formula

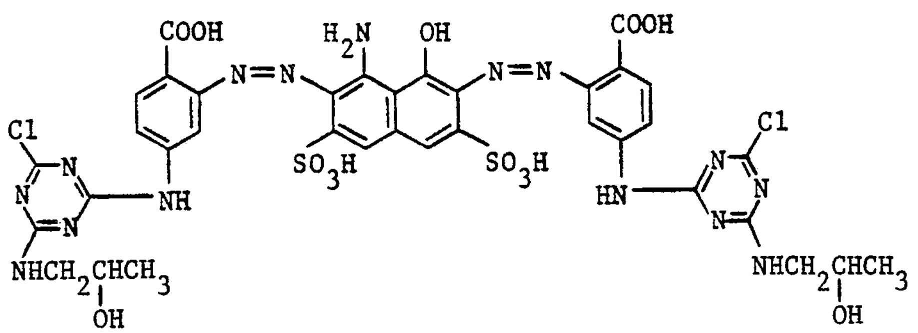

is obtained. It dyes cotton a deep greenish blue shade. The cotton dyeings show good general fastness

properties and especially high resistance to acidic hydrolysis.

**Examples 3-33**

By analogy with the method described in Example 1, using appropriate starting compounds, further compounds of formula I may be prepared. They correspond to formula V

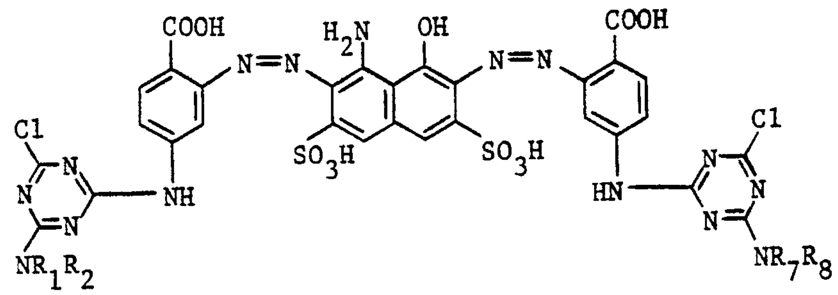

V

in which the symbols are as defined in the following Table.

Compounds of formula V in which $-NR_1R_2$ is different from $-NR_7R_8$ may be prepared by reacting one mole of the compound of formula II with two moles of two different amino compounds of formula III either stepwise in an appropriate manner or using two moles of a mixture of two different amino compounds of formula III in one step. Normally, a mixture of compounds of formula V will be obtained containing (1) the compound in which $-NR_1R_2$ is different from $-NR_7R_8$, (2) the compound having two identical $-NR_1R_2$ radicals, and (3) the compound having two identical $-NR_7R_8$ radicals, in a more or less statistical ratio. Such a dye mixture can be used as such for dyeing or printing. If desired, a relatively pure compound of formula V in which $-NR_1R_2$ is different from $-N_7R_8$ can be separated from the mixture of (1) to (3) by conventional means, e.g., by chromatographic methods.

The dyestuffs of formula V dye natural or regenerated cellulose fibres, particularly cotton, using the common exhaust dyeing method a greenish blue shade. The dyeings thus obtained show good fastness properties.

**TABLE**

| Ex. No. | $-NR_1R_2$ | $-NR_7R_8$ |
|---|---|---|
| 3 | 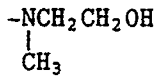 | 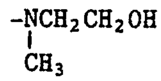 |
| 4 | $-N(CH_2CH_2OH)_2$ | $-N(CH_2CH_2OH)_2$ |
| 5 | $-NHCH_2CH_2CH_2OH$ | $-NHCH_2CH_2CH_2OH$ |
| 6 | 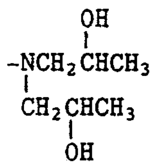 | 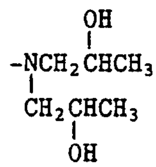 |
| 7 | 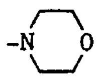 | 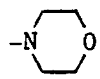 |
| 8 | 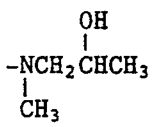 | 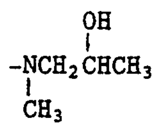 |
| 9 | 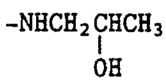 | 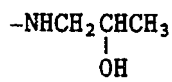 |
| 10 | 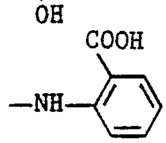 | 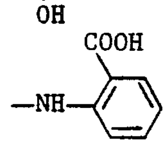 |
| 11 | 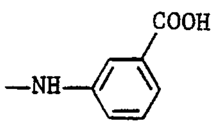 | 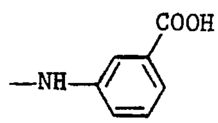 |
| 12 | 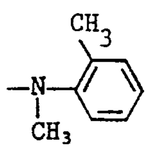 | 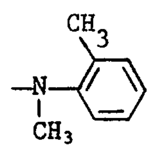 |
| 13 | 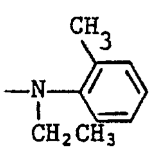 | 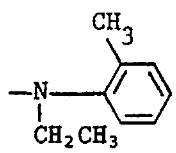 |
| 14 | 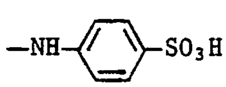 | 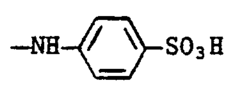 |

**TABLE** (continued)

| Ex. No. | $-NR_1R_2$ | $-NR_7R_8$ |
|---|---|---|
| 15 | 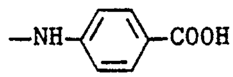 | 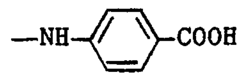 |
| 16 | 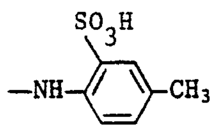 | 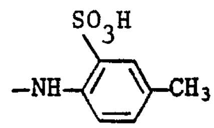 |
| 17 | $-NHCH_2CHCH_2CH_3$<br>\|<br>OH | $-NHCH_2CHCH_2CH_3$<br>\|<br>OH |
| 18 | $-NHCH_2CH_2COOH$ | $-NHCH_2CH_2COOH$ |
| 19 | $-NHCH_2CH_2OSO_3H$ | $-NHCH_2CH_2OSO_3H$ |
| 20 | 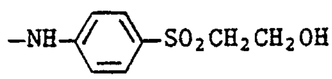 | 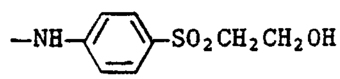 |
| 21 | 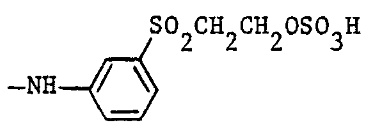 | 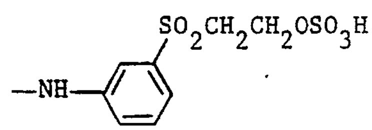 |
| 22 | 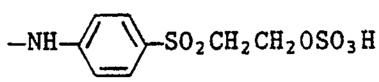 | 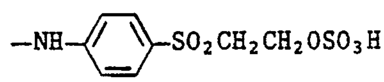 |
| 23 | $-NHCH_2CH_2CH_2N(CH_2CH_3)_2$ | $-NHCH_2CH_2CH_2N(CH_2CH_3)_2$ |
| 24 | $-NHCH_2CH_2OH$ | $-N(CH_2CH_2OH)_2$ |
| 25 | do. | $-NCH_2CH_2OH$<br>\|<br>$CH_3$ |
| 26 | do. | 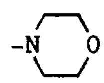 |
| 27 | $-N(CH_2CH_2OH)_2$ | do. |
| 28 | $-NCH_2CH_2OH$<br>\|<br>$CH_3$ | do. |
| 29 | do. | $-NHCH_2CHCH_3$<br>\|<br>OH |

**TABLE** (continued)

| Ex. No. | $-NR_1R_2$ | $-NR_7R_8$ |
|---|---|---|
| 30 | $-NHCH_2CH_2OH$ | $-NHCH_2CHCH_3$<br>\|<br>OH |
| 31 | $-N(CH_2CH_2OH)_2$ | do. |
| 32 | $-NHCH_2CH_2OH$ | 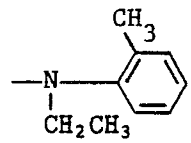 |
| 33 | $-NCH_2CH_2OH$<br>\|<br>$CH_3$ | 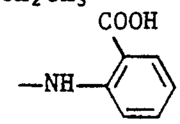 |

In accordance with the method as described the dyestuffs of Examples 1 to 33 are obtained essentially in sodium salt form. They may, depending on the reaction/isolation conditions or by reacting the sodium salts in accordance with known methods, also be obtained in free acid form or in other salt forms, for example those salt forms containing one or more cations indicated in the description above.

In the following examples the application of the compounds of this invention is illustrated.

**Application Example A**

50 parts of mercerized cotton fabric are added to a dyebath consisting of 1000 parts of water, 20 parts of Glauber's salt (calcined), 2.5 parts of sodium carbonate (calcined) and 1 part of the sodium salt of 1-nitrobenzene-3-sulphonic acid. The bath is heated to 40°, then 1 part of the dyestuff of Example 1 is added. The temperature is raised to 98° over 45 minutes. During this time, 20 parts of Glauber's salt (calcined) are added after 15 minutes and a further 20 parts of Glauber's salt (calcined) are added after a further 15 minutes. At the end of this time, 7.5 parts of sodium carbonate (calcined) are added. Dyeing is continued at the boil for 45 to 60 minutes. Subsequently, the dyed fabric is removed from the liquor, rinsed with running hot water, and washed at the boil for 15 minutes in 500 parts of demineralised water in the presence of 0.25 part of Marseilles soaps. After rinsing and drying a slightly greenish blue cotton dyeing with good fastness properties is obtained.

**Application Example B**

1 Part of the dyestuff of Example 1 is dissolved in 2000 parts of water. 100 Parts of cotton fabric are added, and the temperature of the dyebath is raised to 80° over 10 minutes. 30 Minutes after the addition of 100 parts of Glauber's salt (calcined), 20 parts of sodium carbonate (calcined) are added to the dyebath. Dyeing is allowed to continue for one hour at 80°. The dyed fabric is subsequently removed from the dyebath and is rinsed with running cold and then hot water and washed at the boil according to the method given in Application Example A. After rinsing and drying, a slightly greenish blue cotton dyeing is obtained having good fastness properties.

Similarly, the dyestuffs of Examples 2-33 or a mixture of two or more dyestuffs of Examples 1-33 can be used to dye cotton in accordance with the method described in Application Example A or B. Greenish blue cotton dyeings are obtained which have good fastness properties.

**Application Example C**

A printing paste consisting of

| | |
|---|---|
| 40 | parts of the dyestuff of Example 1, |
| 100 | parts of urea, |
| 340 | parts of water, |
| 500 | parts of a 4% sodium alginate thickener, and |
| 20 | parts of sodium carbonate |
| 1000 | parts in all |

is applied to cotton fabric by a conventional printing method.

The printed fabric is dried and fixed in steam at 102-105° for 4-8 minutes. It is then rinsed with cold and hot water, washed at the boil (according to the method described in Application Example A) and dried. The resulting greenish blue print shows good general fastness properties.

Similarly, the dyestuffs of Examples 2-33 or a mixture of two or more dyestuffs of Examples 1 to 33 may be employed to print cotton in accordance with the method described in Application Example C. All prints obtained are greenish blue and show good fastness properties.

## Claims

1. A compound of formula I

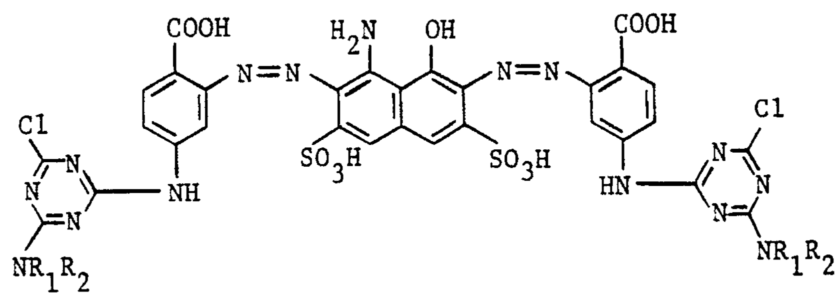

I

in free acid or salt form, in which
each $R_1$, independently, is hydrogen, unsubstituted $C_{1-4}$alkyl, $C_{1-4}$alkyl monosubstituted by halogen, hydroxy, $C_{1-4}$alkoxy, $-SO_3H$, $-OSO_3H$, -COOH or

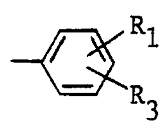 ,

or $C_{5-6}$cycloalkyl,
each $R_2$, independently, is hydrogen, unsubstituted $C_{1-4}$alkyl,
$C_{1-4}$alkyl monosubstituted by halogen, hydroxy, $C_{1-4}$alkoxy, $-N(R_9)_2$, $-SO_3H$, $-OSO_3H$, -COOH or

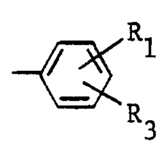 ,

$C_{5-6}$cycloalkyl or

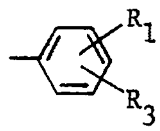

,

in which
each $R_9$ is independently $C_{2-4}$alkyl, and
each $R_3$, independently, is hydrogen, $C_{1-4}$alkoxy, $-SO_3H$, $-S0_2R_4$, $-SO_2NH_5R_6$, $-CONR_5R_6$ or -COOH, in which
$R_4$ is $C_{1-4}$alkyl or $C_{2-4}$alkyl monosubstituted by hydroxy or $-OSO_3H$, and
each $R_5$ and $R_6$, independently, is hydrogen, $C_{1-4}$alkyl or $C_{2-4}$hydroxyalkyl,
or
each $-NR_1R_2$, independently, forms the ring

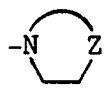

,

in which
Z is $-(CH_2)_n-$, $-(CH_2)_2-NR_1-$ or $-(CH_2)_2-O-$ wherein
n is 2 or 3 and which is bound to the nitrogen atom of the above ring via the carbon atom,
and mixtures of compounds of formula I.

2. A compound or mixture according to Claim 1, in which each $-NR_1R_2$, independently, is $-NR_{1a}R_{2a}$ wherein
$R_{1a}$ is hydrogen, methyl, ethyl or $C_{2-3}$hydroxyalkyl, and
$R_{2a}$ is hydrogen, methyl, ethyl, $C_{2-4}$alkyl monosubstituted by hydroxy, $-N(R_9)_2$, $-SO_3H$, $-OSO_3H$ or -COOH, $C_{1-3}$alkyl monosubstituted by

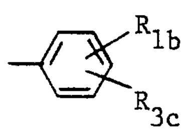

,

cyclohexyl or

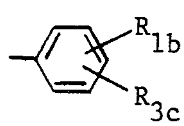

,

in which
$R_{1b}$ is hydrogen, methyl, ethyl or $-CH_2CH_2OH$, and
$R_{3c}$ is hydrogen, $-SO_3H$, $-SO_2R_{4b}$ or -COOH, and
$R_{4b}$ is $-(CH_2)_2-OH$ or $-(CH_2)_2-OSO_3H$,
or
each $-NR_{1a}R_{2a}$, independently, is

; 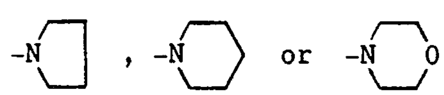 .

3. A compound or mixture according to Claim 1, in which each $-NR_1,R_2$, independently, is $-NR_{1b}R_{2b}$ wherein
$R_{1b}$ is hydrogen, methyl, ethyl or $-CH_2CH_2OH$, and
$R_{2b}$ is methyl, ethyl, $C_{2-3}$hydroxyalkyl or

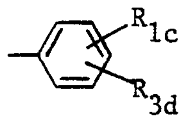

in which
$R_{1c}$ is hydrogen or methyl, and
$R_{3d}$ is hydrogen, $-SO_3H$ or -COOH,
or
each $-NR_{1b}R_{2b}$ is

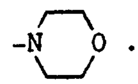

4. A compound according to any one of Claims 1 to 3, in which both groups $-NR_1R_2$ are identical.
5. A process for the preparation of a compound of formula I or a mixture of compounds of formula I defined in Claim 1, comprising reacting the compound of formula II

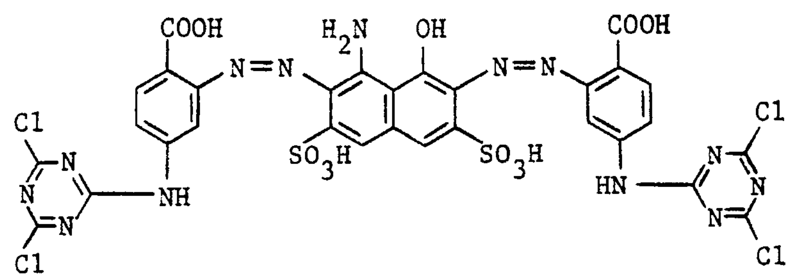

II

which is in free acid or salt form,
with two compounds of formula III
$HNR_1R_2$ III
in which $R_1$ and $R_2$ are as defined in Claim 1,
which are used in free amine or ammonium salt form, in such an amount that one chlorine atom of each triazine ring of the compound of formula II is replaced whereby the amino compounds of formula III may be the same or are a mixture of different amines in any ratio to each other.
6. A process for dyeing or printing hydroxy group- or nitrogen-containing organic substrates comprising applying to the substrate a compound of formula I or a mixture of compounds of formula I defined in Claim 1, as dyeing or printing agent.
7. A process according to Claim 6, wherein the substrate is leather or a fibre material containing or consisting of natural or regenerated cellulose.
8. A process according to Claim 7, wherein the substrate is a textile material containing or consisting of cotton.

Claims for the following Contracting State: ES

1. A process for the preparation of a compound of formula I

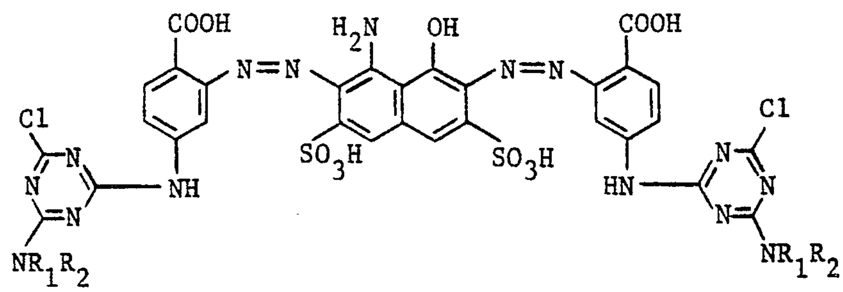

I

in free acid or salt form, or a mixture of compounds of formula I, in which
each $R_1$, independently, is hydrogen, unsubstituted $C_{1-4}$alkyl, $C_{1-4}$alkyl monosubstituted by halogen, hydroxy, $C_{1-4}$alkoxy, $-SO_3H$, $-OSO_3H$, -COOH or

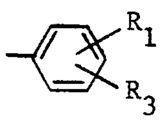

,

or $C_{5-6}$cycloalkyl,
each $R_2$, independently, is hydrogen, unsubstituted $C_{1-4}$alkyl, $C_{1-4}$alkyl monosubstituted by halogen, hydroxy, $C_{1-4}$alkoxy, $-N(R_9)_2$, $-SO_3H$, $-OSO_3H$, -COOH or

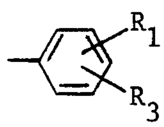

,

$C_{5-6}$cycloalkyl or

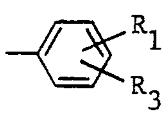

in which
each $R_9$ is independently $C_{2-4}$alkyl, and
each $R_3$, independently, is hydrogen, $C_{1-4}$alkoxy, $-SO_3H$, $-SO_2R_4$, $-SO_2NR_5R_6$, $-CONR_5R_6$ or -COOH, in which
$R_4$ is $C_{1-4}$alkyl or $C_{2-4}$alkyl monosubstituted by hydroxy or $-OSO_3H$, and
each $R_5$ and $R_6$, independently, is hydrogen, $C_{1-4}$alkyl or $C_{2-4}$hydroxyalkyl,
or
each $-NR_1R_2$, independently, forms the ring

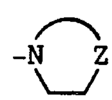

,

in which
Z is $-(CH_2)_n-$, $-(CH_2)_2-NR_1-$ or $-(CH_2)_2-O-$ wherein
n is 2 or 3 and which is bound to the nitrogen atom of the above ring via the carbon atom,
**comprising** reacting the compound of formula II

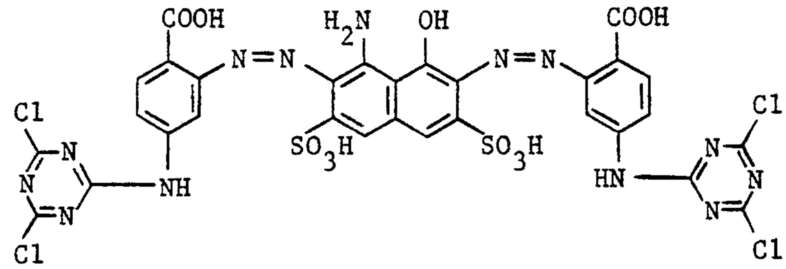

II

which is in free acid or salt form,
with two compounds of formula III

$HNR_1R_2$ III

in which $R_1$ and $R_2$ are as defined above,
which are used in free amine or ammonium salt form,
in such an amount that one chlorine atom of each triazine ring of the compound of formula II is replaced whereby the amino compounds of formula III may be the same or are a mixture of different amines in any ratio to each other.

2. A process according to Claim 1, for the preparation of a compound of formula I or a mixture thereof, in which each $-NR_1R_2$, independently, is $NR_{1b}R_{2b}$ wherein
$R_{1b}$ is hydrogen, methyl, ethyl or $-CH_2CH_2OH$, and
$R_{2b}$ is methyl, ethyl, $C_{2-3}$hydroxyalkyl or

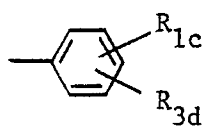

in which
$R_{1c}$ is hydrogen or methyl, and
$R_{1d}$ is hydrogen, $-SO_3H$ or -COOH,
or
each $-NR_{1b}R_{2b}$ is

is 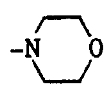 .

3. A process according to Claim 1 or 2, for the preparation of a compound of formula I, in which both $-NR_1R_2$ are identical.

4. A process for dyeing or printing hydroxy group- or nitrogen-containing organic substrates comprising applying to the substrate a compound of formula I or a mixture of compounds of formula I obtained according to Claim 1, as dyeing or printing agent.

5. A process according to Claim 4, wherein the substrate is leather or a fibre material containing or consisting of natural or regenerated cellulose.

6. A process according to Claim 5, wherein the substrate is a textile material containing or consisting of cotton.

European Patent Office

# EUROPEAN SEARCH REPORT

Application Number

EP 90 81 0523

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 185 661 (ICI) * Claims 1,3 * --- | 1-6 | C 09 B 62/09 D 06 P 1/38 |
| A | EP-A-0 170 612 (CIBA-GEIGY) * Claims 1-12 * --- | 1-6 | |
| A | EP-A-0 048 355 (HOECHST) * Claims 1,2 * ----- | 1-6 | |

TECHNICAL FIELDS SEARCHED (Int. Cl.5)

C 09 B

The present search report has been drawn up for all claims

| Place of search | Date of completion of the search | Examiner |
|---|---|---|
| THE HAGUE | 16-10-1990 | GINESTET M.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)